# EUROPÄISCHE PATENTSCHRIFT

(11) **EP 3 303 101 B1**
(45) Veröffentlichungstag und Bekanntmachung des Hinweises auf die Patenterteilung: **27.03.2019**
(21) Anmeldenummer: 16727152.7
(22) Anmeldetag: 24.05.2016
(51) Int. Cl.: B62D 7/14, F15B 20/00, F15B 11/036

(54) **ZYLINDEREINHEIT**
CYLINDER UNIT
UNITÉ DE CYLINDRE

(30) Priorität: 29.05.2015 DE 102015108521
(43) Veröffentlichungstag der Anmeldung: 11.04.2018
(73) Patentinhaber: SAF-HOLLAND GmbH, 63856 Bessenbach (DE)
(72) Erfinder: CHRIST, Armin, 63856 Bessenbach (DE)
(74) Vertreter: Müller Schupfner & Partner Patent- und Rechtsanwaltspartnerschaft mbB
(86) Internationale Anmeldenummer: PCT/EP2016/061692
(87) Internationale Veröffentlichungsnummer: WO 2016/193065

(56) Entgegenhaltungen:
- EP-A1- 2 465 753
- EP-A1- 2 529 996
- WO-A1-2016/078885
- DE-A1- 3 811 312
- DE-A1-102012 105 976
- JP-A- S6 250 279

## Beschreibung

Die vorliegende Erfindung betrifft eine Zylindereinheit, insbesondere zum Einsatz in Nutzfahrzeugen.

Zylindereinheiten insbesondere zum Einsatz in hydraulischen oder pneumatischen Systemen für Nutzfahrzeuge sind aus dem Stand der Technik bekannt. In aktiv gelenkten Achsen eines Nutzfahrzeuges, vorzugsweise eines Nutzfahrzeuganhängers, kommen dabei Zylindereinheiten zum Einsatz, bei welchen ein Kolben in einem Gehäuse angeordnet und mit einem unter Druck stehenden Fluid mit einer Kraft beaufschlagbar ist, um einen Lenkausschlag der Räder über eine Spurstange oder Kolbenstange zu erreichen. Problematisch bei den aus dem Stand der Technik bekannten Systemen ist, dass bei einem Systemausfall des hydraulischen Systems oder des pneumatischen Systems die erforderliche Rückstellung der Räder in Geradeausfahrstellung nur unter relativ hohem Aufwand möglich ist. So muss nach derzeitigem Stand stets ein paralleler Sicherheitskreislauf vorgesehen sein, welcher bei Systemausfall des primären Pneumatik- oder Hydrauliksystems auf die Lenkung einwirkt, beispielsweise um eine Geradeausfahrstellung der Räder zu erreichen. Hierbei sind zusätzlich zu der primären hydraulischen Anlage weitere Zylindereinheiten erforderlich, um die Lenkanlage des Nutzfahrzeuges bei einem Systemausfall eines der hydraulischen Systeme dennoch in eine Nulllage zurückführen zu können. Dies verursacht einen hohen Bauraumbedarf, ein hohes Gewicht und einen besonders hoher Steuerungsaufwand, um die verschiedenen Sicherheitskreisläufe eines Lenksystems eines Nutzfahrzeuges mit den entsprechenden Signalen ansteuern zu können.

Die EP 2 529 996 A1 betrifft eine Zylindereinheit zum Einsatz in Fahrzeugen für Lenkgetriebe.

Die EP 2 465 753 A1 betrifft eine Steuerungsvorrichtung zur Steuerung eines hydraulischen Steuerzylinders, der einen Lenkzylinder aufweist, welcher von einem Lenkkolben in zwei Arbeitsräume unterteilt ist.

Die DE 38 11 312 A1 betrifft einen doppelt wirkenden Arbeitszylinder, dessen beide Druckräume über Leitungen und über ein Steuerventil mit einer Druckmittelquelle verbindbar sind.

Die DE 10 2012 105 976 A1 betrifft ein Lenksystem für eine Nachlaufachse eines Fahrzeugs.

Die WO 2016/078885 A1 betrifft ein Lenksystem für wenigstens eine Nachlauf- oder Vorlaufachse eines Fahrzeugs.

Die JP 62 502 79 A betrifft eine Hinterradsteuerungsvorrichtung.

Aufgabe der vorliegenden Erfindung ist es, eine Zylindereinheit bereit zu stellen, welche eine kompakte Bauweise und ein geringes Gewicht aufweist und gleichzeitig die Anforderungen an die Betriebssicherheit beim Einsatz der Zylindereinheit im Lenksystem eines Nutzfahrzeuges erfüllt.

Diese Aufgabe wird gelöst mit einer Zylindereinheit gemäß Anspruch 1. Weitere Vorteile und Merkmale der vorliegenden Erfindung ergeben sich aus den abhängigen Ansprüchen.

Erfindungsgemäß umfasst die Zylindereinheit eine Stange und ein Gehäuse, wobei die Stange längs einer Stellachse verlagerbar an dem Gehäuse geführt ist, wobei an der Stange ein Kolben festgelegt ist, welcher den Innenraum des Zylinders in eine erste Kammer teilt, wobei das Gehäuse einen Sicherheitsauslass aufweist, wobei der Sicherheitsauslass derart angeordnet und/oder ausgebildet ist, dass der Kolben den Sicherheitsauslass fluiddicht verschließt, wenn sich die Stange in einer Nulllage befindet. Die Hauptkomponenten der Zylindereinheit sind eine Stange mit einem Kolben, sowie ein Gehäuse wobei an dem Gehäuse ein Sicherheitsauslass derart angeordnet ist, dass, wenn sich die Stange in einer Nulllage befindet, der an der Stange festgelegte Kolben vorzugsweise derart angeordnet ist, dass er den Sicherheitsauslass fluiddicht verschließt. Als Nulllage der Stange wird im vorliegenden Zusammenhang vorzugsweise die Lage der Stange relativ zum Gehäuse definiert, bei der die Stange eine Geradeausfahrstellung der Räder des Nutzfahrzeuges, mit welchen die Stange vorzugsweise in Eingriff steht, sicher stellt. Insbesondere bevorzugt ist der Sicherheitsauslass dabei mittig bezogen auf die Erstreckung des Gehäuses längs der Stellachse an dem Gehäuse vorgesehen, so dass wenn der Kolben sich in der mittigen Stellung im Gehäuse befindet, dieser den Sicherheitsauslass fluiddicht verschließt. Das erfindungsgemäße Merkmal eines Sicherheitsauslasses, welcher durch einen Kolben fluiddicht verschließbar ist, erlaubt eine besonders einfache Stellung der Rückführung der Stange in ihre Nulllage. So kann, wenn sich die Stange außerhalb der Nulllage befindet und der Kolben somit versetzt zum Sicherheitsauslass angeordnet ist, auf einer Seite des Kolbens kein Fluid über den Sicherheitsauslass entweichen, während auf der Seite des Kolbens auf der sich auch der Sicherheitsauslass befindet, das Fluid aus der Druckkammer in den Sicherheitsauslass entweichen kann. Dies führt bei gleichmäßiger Bedrückung der ersten und der zweiten Kammer dazu, dass sich der Kolben gemeinsam mit der Stange in Richtung der Nulllage der Stange bewegt. Diese Bewegung in Richtung der Nulllage der Stange findet solange statt, bis der Kolben den Sicherheitsauslass verschließt und somit der Druck in beiden Kammern des Gehäuses die gleiche Größe aufweist, da kein Fluid mehr über den Sicherheitsauslass entweichen kann. Durch das Verschließen des Sicherheitsauslasses durch den Kolben tritt eine vorzugsweise automatische hydraulische oder pneumatische Blockierung der Stange gegen Verlagerung längs der Stellachse ein. Der Vorteil an der sehr einfachen Ausführung des Gehäuses mit einem Sicherheitsauslass und eines Kolbens, welcher den Sicherheitsauslass fluiddicht verschließt, ist, daß keinerlei Regelungsautomatik benötigt wird, um eine automatische Rückstellung der Stange in die Nulllage zu bewirken. Dieses Merkmal der vorliegenden Erfindung eignet sich insbesondere zur Verwendung in Nachlauflenkachsen oder Lenkachsen, welche keinen Lenkschenkelversatz aufweisen, da durch einfache gleichmäßige Bedrückung der beiden Kammern des Gehäuses eine Zurückstellung der gelenkten Räder des Nutzfahrzeuges in die Geradeausfahrstellung ohne weiteren Regelungsaufwand erfolgt. Es können somit aufwendige Steuerungssysteme der hydraulischen oder pneumatischen Anlage entfallen, wodurch Gewicht und Kosten gespart werden

Vorzugsweise ist der Sicherheitsauslass als Aussparung in der Innenwand des Gehäuses ausgebildet, wobei der Kolben einer Erstreckung parallel zur Stellachse aufweist, die zumindest so groß ist wie die Erstreckung des Sicherheitsauslasses parallel zur Stellachse. Insbesondere bevorzugt ist der Sicherheitsauslass als im Wesentlichen kreisförmige oder runde Aussparung in die Innenwand des Gehäuses eingebracht. Das Gehäuse ist vorzugsweise hohlzylinderförmig ausgebildet, wobei an der Innenwand des Gehäuses der Kolben gemeinsam mit der Stange im Wesentlichen fluiddicht entlang gleitet. Die Zylinderachse des Gehäuses ist dabei vorzugsweise die Stellachse entlang derer die Stange am Gehäuse geführt ist. Vorzugsweise weist der Kolben eine Erstreckung parallel zur Stellachse auf, mit anderen Worten eine Dicke, die zumindest so groß ist wie die Erstreckung des Sicherheitsauslasses parallel zur Stellachse. Insbesondere bevorzugt ist die Kolbendichtung dafür auslegt, den Sicherheitsauslass abzudecken oder zwischen zwei voneinander beabstandeten Dichtungen einzuschließen, wodurch verhindert wird, dass Fluid aus einer der beiden Kammern in den Sicherheitsauslass einfließt. Hierdurch fungiert der Kolben mit in den Kammern befindlichem Fluid vorzugsweise als Lenksperre.

Weiterhin bevorzugt weist das Gehäuse zwei Anschlüsse auf, wobei der erste Anschluss in die erste Kammer und der zweite Anschluss in die zweite Kammer mündet, wobei der Sicherheitsauslass bezogen auf die Schwerkraft vorzugsweise oberhalb oder im wesentlichen gegenüberliegend der Anschlüsse angeordnet ist. Insbesondere bevorzugt, wenn in einem Notfall das Gehäuse nachträglich mit einem Druckmittel gefüllt wird, ist eine Entlüftung des Gehäuses besonders einfach, wenn der Sicherheitsauslass sich oben an dem Gehäuse befindet. Es kann auf sehr einfache Weise und ohne weitere Lüftungsbohrungen die Entlüftung des Gehäuses vorgenommen werden und dieses vollständig mit dem entsprechenden Fluid befüllt werden, welches die Rückstellung des Kolbens gemeinsam mit der Stange in die Nulllage der Stange bewirkt. Dabei sorgt die Anordnung des Sicherheitsauslasses oberhalb des Anschlüsse des Gehäuses dafür, dass zunächst die im Gehäuse und in den beiden Kammern befindliche Luft entweichen kann und das vorzugsweise vorgesehene hydraulische Fluid von unten her die erste und die zweite Kammer flutet und somit für eine Rückstellung der Stange in die Nulllage sorgt.

Vorzugsweise ist über die Anschlüsse ein Betriebsfluid oder ein Sicherheitsfluid in die Kammern einleitbar. In einer ersten bevorzugten Ausführungsform sind dabei zwei Kammern vorgesehen, in welchen das Betriebsfluid eingeleitet wird und mit einem entsprechenden Betriebskolben, welcher an der Stange festgelegt ist, in Wechselwirkung tritt. In benachbart zu diesen Kammern angeordneten Sicherheitskammern, in welchen ein Sicherheitskolben angeordnet ist, kann vorzugsweise bei einem Ausfall oder bei gewolltem Deaktivieren der Betriebshydraulik ein Sicherheitsfluid eingeleitet werden, um den Sicherheitskolben gemeinsam mit der Stange in die Nulllage zurück zu versetzen und zu blockieren. Alternativ bevorzugt können an den Anschlüssen entsprechende Schaltventile vorgesehen sein, welche entweder das Einströmen des Sicherheitsfluides oder das Ein- und Ausströmen des Betriebsfluides zulassen. Besonders bevorzugt ist dabei eine strikte Trennung zwischen Betriebsfluid und Sicherheitsfluid vorgesehen, um insbesondere die gesetzlich vorgeschriebene Regelung für eine parallele Bereitstellung zweier unabhängiger Pneumatik- oder Hydraulikkreisläufe zu befolgen und dennoch nur einen einzelnen Zylinder verwenden zu können, in welchem sowohl der reguläre Trieb der Längsstange und der Lenkung des Nutzfahrzeuges möglich ist als auch eine Rückstellung der Stange in die Nulllage bei Ausfall eines der regulären Hydraulik- oder Pneumatiksysteme.

Besonders bevorzugt weist der Kolben zwei Dichtungselemente auf, wobei der parallel zur Stellachse gemessene Abstand der Dichtungselemente voneinander gleich der oder größer als die Erstreckung des Sicherheitsauslasses parallel zur Stellachse ist. Als relevanter Abstand der beiden Dichtungselemente voneinander wird dabei vorzugsweise der mittlere Abstand, d.h. der jeweils bezogen auf die Stellachse in der Mitte der Dichtungselemente liegende Abstand der Dichtungselemente voneinander angesehen. Besonders bevorzugt ist der Abstand der Dichtungselemente genau gleich der Erstreckung des Sicherheitsauslasses parallel zur Stellachse. In diesem Fall ist ein sehr genaues Einstellen der Nulllage möglich, da erst wenn der Kolben gemeinsam mit der Stange sich genau in der Nulllage befindet, eine vollständige Abdichtung des Sicherheitsauslasses stattfindet. Ein größerer Abstand der Dichtungselemente voneinander kann aber dann bevorzugt sein, wenn eine bessere Unempfindlichkeit der Zylindereinheit gegen Schwingungen wie sie im Betrieb eines Nutzfahrzeuges auftreten, erforderlich ist und somit auch bei kleineren Abweichungen von der Nulllage beispielsweise durch periodische Schwingungen, der Sicherheitsauslast dennoch im Wesentlichen verschlossen bleiben soll. Besonders bevorzugt ist der Abstand des Dichtungselements ein 1,05 bis 1,2-faches der Erstreckung des Sicherheitsauslasses parallel zur Stellachse. Für diesen bevorzugten Bereich hat sich gezeigt, dass ein guter Kompromiss aus einer genauen Einstellung der Nulllage und gleichzeitig einer ausreichenden Toleranz bei einer Vorbeibewegung des Kolbens an dem Sicherheitsauslass gegeben ist.

In einer bevorzugten Ausführungsform weist die Stange einen ersten Kolben und einen zweiten Kolben auf, welche voneinander beabstandet sind, wobei der erste Kolben eine erste Sicherheitskammer und eine zweite Sicherheitskammer voneinander trennt, wobei der zweite Kolben eine erste Arbeitskammer und eine zweite Arbeitskammer voneinander trennt, wobei die zweite Arbeitskammer und die zweite Sicherheitskammer durch zumindest eine, vorzugsweise zwei Trennwände des Gehäuses voneinander getrennt sind. Diese Ausführungsform der Zylindereinheit bildet sich dadurch aus, dass in ein- und demselben Gehäuse insgesamt vier Kammern vorgesehen sind, von denen zwei Kammern von einem ersten Kolben und zwei weitere Kolben von einem zweiten Kolben voneinander getrennt werden. Der erst Kolben trennt dabei die Sicherheitskammern voneinander und der zweite Kolben trennt die Arbeitskammern voneinander. Insbesondere kann hierbei im regulären Betrieb des Nutzfahrzeuges und der Zylindereinheit nur die erste und die zweite Arbeitskammer mit einem Arbeitsfluid beaufschlagt werden und eine Verlagerung der Stange über den zweiten Kolben und das an den beiden Seiten des zweiten Kolbens angreifende Arbeitsfluid erreicht werden. Die Sicherheitskammern sind vorzugsweise leer oder insbesondere bevorzugt lediglich mit Luft gefüllt, wobei der erste und der zweite Sicherheitsanschluss sowie der Sicherheitsauslass vorzugsweise offen für eine Ein- und Ausströmung des in der Sicherheitskammer befindlichen Fluides sind. In dem Fall, in dem an der regulären Hydraulik des Nutzfahrzeuges ein Fehler auftritt oder bei einer Rückwärtsfahrt des Nutzfahrzeuges die Lenkung in eine Geradeausfahrstellung gebracht werden soll, kann in die erste und in die zweite Sicherheitskammer ein entsprechendes Sicherheitsfluid eingeleitet werden, wobei durch das Sicherheitsfluid der erste Kolben derart mit einer Kraft beaufschlagt wird, dass er die Stange in ihre Nulllage zurückführt und schließlich bei Erreichen der Nulllage durch den Verschluss des Sicherheitsauslasses die Stange in dieser Nulllage blockiert. Im Vergleich zu den herkömmlichen aus dem Stand der Technik bekannten Lenkvorrichtung, bei denen weitere Spurstangen oder zusätzliche Zylinder für die Bereitstellung dieser Funktionen erforderlich sind, ist die im vorliegenden Fall vorgeschlagene Zylindereinheit besonders kompakt, weist einen nur sehr geringen Bauraumbedarf auf und erfordert insbesondere für eine Zurückstellung der Stange in die Nulllage nur einen sehr geringen Regelungsaufwand. Zur Rückstellung muss lediglich in die beiden Sicherheitskammern ein unter Druck stehendes Fluid mit gleichem Druck eingeleitet werden und die Rückstellung des Sicherheitskolbens und der Stange erfolgt anschließend automatisch. Insbesondere bevorzugt kann das Sicherheitsfluid dabei aus einem Vorratsspeicher in die erste und die zweite Sicherheitskammer einströmen, wobei der Vorratsspeicher vorzugsweise durch ein rückstellfähiges Medium oder beispielsweise eine metallische Feder mit einer entsprechenden Kraft beaufschlagt wird, um gänzlich ohne Pumpeneinsatz ein Sicherheitsfluid bereitzustellen, welches ausreicht, um eine Zurückstellung der Stange in die Nulllage zu gewährleisten.

Vorzugsweise ist ein Sicherheitsmodus der Zylindereinheit durch Einleiten eines Fluids gleichen Druckes in die erste und in die zweite Sicherheitskammer herstellbar, wobei die Zylindereinheit derart ausgebildet ist, dass der erste Kolben so lange in Richtung des Sicherheitsauslasses verlagert wird, bis er den Sicherheitsauslass fluiddicht verschließt. Der Vorteil dieser Ausführungsform der Zylindereinheit ist, dass der Sicherheitsmodus ohne weitere Regelung oder Steuerung hergestellt werden kann. Lediglich das Bereitstellen eines Fluids mit ausreichendem Druck in die erste und in die zweite Sicherheitskammer führt zu einer Verlagerung der Stange in die Nulllage und ein hydraulisches Blockieren der Stange in dieser Stellung.

Weiterhin bevorzugt ist ein Betriebsmodus der Zylindereinheit dadurch gekennzeichnet, dass der zweite Kolben durch ein Fluid der ersten Arbeitskammer oder der zweiten Arbeitskammer längs der Stellachse verschoben wird bzw. verschiebbar ist, wobei die erste und die zweite Sicherheitskammer vorzugsweise fluidleer sind. Als fluidleer wird im vorliegenden Fall vorzugsweise die Befüllung mit Luft oder einem sehr widerstandsarmen Gas bezeichnet. Insbesondere bevorzugt kann dabei Fluid aus den Sicherheitskammern möglichst widerstandsarm ein- und ausströmen. Dies erlaubt im regulären Betrieb der Zylindereinheit einen möglichst widerstandsarmen Betrieb, wodurch nur geringe Verluste im Bereich der Sicherheitskammern auftreten.

Besonders bevorzugt sind die erste und die zweite Sicherheitskammer dafür ausgelegt, mit Druckluft befüllt zu werden. Druckluft eignet sich insbesondere zur Herstellung einer Nulllage bei Systemausfall der regulären Hydraulik eines Nutzfahrzeuges, da sie aus der Umgebungsluft aufgenommen werden kann und beispielsweise über eine kleine sehr einfache Pumpe bereitgestellt werden kann. Insbesondere entfallen bei der Verwendung von Druckluft weitere Fluidspeicher und es kann das Gesamtgewicht des Nutzfahrzeuges gering gehalten werden. Erfindungsgemäß sind ein erster Sicherheitsanschluss und ein erster Arbeitsanschluss am Gehäuse oder am ersten Anschluss angeordnet und münden in die erste Kammer, wobei ein zweiter Sicherheitsanschluss und ein zweiter Arbeitsanschluss am Gehäuse oder am zweiten Anschluss angeordnet sind und in die zweite Kammer münden, wobei zwei Stellglieder vorgesehen sind, die entweder die Sicherheitsanschlüsse oder die Arbeitsanschlüsse blockieren. Das Gehäuse weist somit nur zwei Kammern auf, in welche parallel und unabhängig voneinander zwei Sicherheitsanschlüsse und zwei Arbeitsanschlüsse einmünden. Dabei kann am Gehäuse selbst vorzugsweise ein erster Anschluss, welcher in die erste Kammer und ein zweiter Anschluss, welcher in die zweite Kammer mündet, vorgesehen sein, wobei der erste Sicherheitsanschluss und der zweite Arbeitsanschluss in den ersten Anschluss mündet und der zweite Sicherheitsanschluss und der zweite Arbeitsanschluss in den zweiten Anschluss mündet. Besonders bevorzugt wird dabei der Bauraum der Zylindereinheit deutlich reduziert, da nicht zwei nebeneinander angeordnete Hydraulik- oder Pneumatikzylinder vorgesehen sind, sondern nur ein Zylinder, welcher eine erste oder eine zweite Kammer und einen Kolben aufweist. Die Stellglieder sind dabei vorzugsweise Schieberventile, welche entweder die Sicherheitsanschlüsse öffnen und die Arbeitsanschlüsse verschließen oder die Arbeitsanschlüsse öffnen und die Sicherheitsanschlüsse verschließen.

Vorzugsweise weist jedes Stellglied ein Rückstellelement auf, welches vorgespannt ist und derart auf das Stellglied wirkt, dass dieses in die Stellung verlagert wird, in der es den Arbeitsanschluss blockiert und den Sicherheitsanschluss freigibt. Es kann auf diese Weise erreicht werden, dass bei einem vollständigen Systemausfall am Nutzfahrzeug das Rückstellmittel bei Fehlen einer entsprechenden Gegenkraft das Stellglied jeweils in die Stellung verlagert, in der der Sicherheitsanschluss freigegeben wird und der Arbeitsanschluss verschlossen wird. Es kann bei diesem Zustand das Sicherheitsfluid jeweils in die erste und die zweite Kammer einströmen, wobei gleichzeitig auch der Sicherheitsauslass in eine geöffnete Stellung versetzt ist und somit eine automatische Rückstellung der Stange in ihre Nulllage erfolgt. Besonders bevorzugt kann das Rückstellelement eine Spiralfeder sein, welche vorgespannt ist und auf das jeweilige Stellglied einwirkt.

Weiterhin bevorzugt ist an dem Stellglied eine Steuerkraft anlegbar, welche der Kraft des Rückstellelements entgegenwirkt, wobei bei Überwiegen der Steuerkraft das Stellglied auch in die Stellung bringbar ist, in welcher es den Sicherheitsanschluss blockiert und den Arbeitsanschluss freigibt. Besonders für den Fall, in dem sämtliche Systeme des Nutzfahrzeuges normal laufen, ist also vorzugsweise eine Steuerkraft am Stellglied vorgesehen, welche der Rückstellkraft des Rückstellelements entgegenwirkt und das Stellglied in die Stellung versetzt, in welcher der Arbeitsanschluss offen und der Sicherheitsanschluss blockiert ist. Die Steuerkraft kann dabei vorzugsweise durch ein Piezoelement oder einen magnetischen Schalter aufgebracht werden. Weiterhin bevorzugt kann die Steuerkraft auch durch das reguläre Hydrauliksystem bereitgestellt werden, wobei bei einem Ausfall der Hydraulik und einem Absinken des Druckes im Hydrauliksystem die Steuerkraft sinkt und schließlich die Rückstellkraft des Rückstellelements überwiegt und die Stellglieder in die Stellung bringt, in welcher die Sicherheitsanschlüsse offen sind und eine automatische Rückstellung der Stange der Zylindereinheit in die Nulllage erfolgt.

Ferner bevorzugt ist der Sicherheitsauslass verschließbar, wobei der Sicherheitsauslass insbesondere dann verschlossen ist, wenn die Stellglieder die Sicherheitsanschlüsse blockieren. Im regulären Betrieb des Nutzfahrzeuges ist bei dieser Ausführungsform der Sicherheitsauslass somit vorzugsweise verschlossen, wobei vorzugsweise ähnlich zu den an den Stellgliedern vorgesehenen Rückstellelementen auch am Sicherheitsauslass ein Ventil mit einem Rückstellelement vorgesehen ist. Das Rückstellelement am Ventil des Sicherheitsauslasses wirkt mit Vorteil einer Steuerkraft entgegen, welche den Sicherheitsauslass verschlossen hält. Im Falle dass die Steuerkraft, beispielsweise bei einem Systemausfall am Nutzfahrzeug, geringer wird, öffnet die Rückstellkraft des Rückstellelements den Sicherheitsauslass vorzugsweise. Auf diese Weise kann erreicht werden, dass ohne eine aktive Steuerung bei einem Systemausfall unmittelbar eine Rückstellung der Stange der Zylindereinheit in die Nulllage bzw. in die Nulllage erfolgen kann und somit eine Geradeausfahrstellung der Räder des Nutzfahrzeuges erreicht wird.

Besonders bevorzugt ist eine Blockiereinheit vorgesehen, um die Stange in der Nulllage zu sichern. Insbesondere dann, wenn die Stange durch einen der zuvor beschriebenen Mechanismen hydraulisch oder pneumatisch in eine Nulllage gebracht wurde, ist es bevorzugt, dass eine Blockiereinheit vorgesehen ist, welche eine mechanische Blockierung einer Verlagerungsbewegung der Stange längs der Stellachse verhindert. Dies dient insbesondere dazu, dass bei weiterem Druckverlust in den Sicherheitskammern eine Verlagerung der Stange längs der Stellachse verhindert wird, auch wenn dies nicht mehr pneumatisch oder hydraulisch möglich ist. Die Blockiereinheit weist dabei vorzugsweise ein Blockierelement auf, welches in Eingriff mit einer entsprechenden Ausformung an der Stange bringbar ist, um eine Verlagerung der Stange längs der Stellachse zu verhindern.

Besonders bevorzugt ist dabei die Blockiereinheit am Gehäuse festlegbar oder unmittelbar in das Gehäuse zumindest bereichsweise integriert. Es kann auf diese Weise erreicht werden, dass die Blockiereinheit mit dem Gehäuse besonders kompakt ausgebildet ist und eine Funktionsintegration sowohl eines Arbeitszylinders, als auch eines rückstellenden Sicherheitszylinders, als auch einer mechanischen Lenkbewegungssperre in ein und demselben System vorgesehen sein kann, ohne dass hierfür viele separate Bauteile benötigt werden.

Weitere Vorteile und Merkmale der vorliegenden Erfindung ergeben sich aus der nachfolgenden Beschreibung mit Bezug auf die beigefügten Figuren. Es versteht sich dabei, dass einzelne der in den Figuren gezeigten Merkmale auch in weiteren Ausführungsformen zum Einsatz gelangen können, sofern sich dies nicht aufgrund technischer Gegebenheiten verbietet oder explizit ausgeschlossen wurde. Es zeigen:
- Fig. 1: eine teilweise geschnittene Ansicht einer ersten bevorzugten Ausführungsform der erfindungsgemäßen Zylindereinheit,
- Fig. 2: eine Schnittansicht einer weiteren bevorzugten Ausführungsform der erfindungsgemäßen Zylindereinheit, und
- Fig. 3: eine weitere bevorzugte Ausführungsform der erfindungsgemäßen Zylindereinheit.

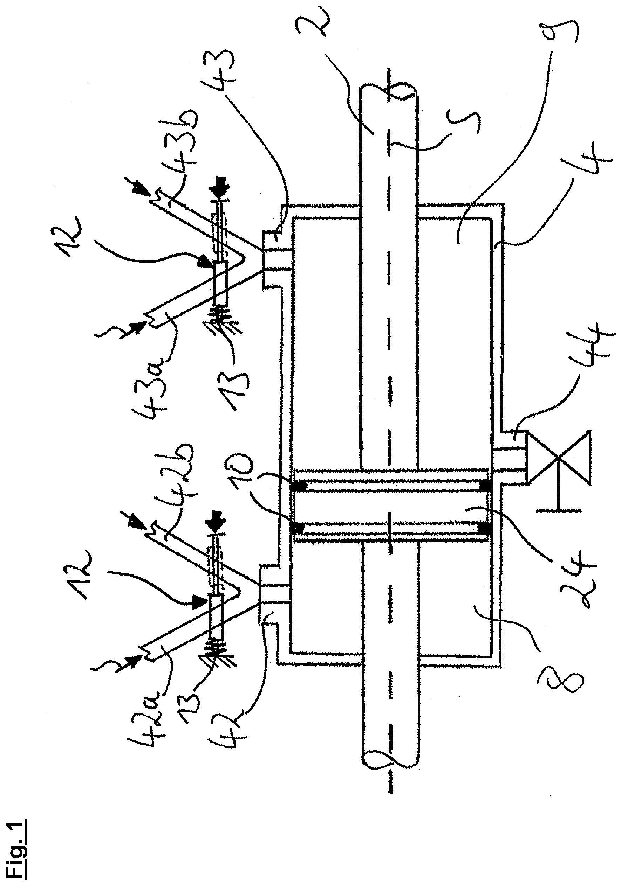

Die in Fig. 1 gezeigte bevorzugte Ausführungsform der Zylindereinheit weist ein Gehäuse 4, eine Stange 2 und einen an der Stange 2 festgelegten Kolben 24 auf. Die Stange 2 ist dabei längs der Stellachse S relativ zum Gehäuse 4 verlagerbar und an den Stirnseiten des Gehäuses jeweils gegen Verlagerung quer zur Stellachse S gesichert. Weiterhin weist das Gehäuse einen ersten Anschluss 42 und einen zweiten Anschluss 43 auf, wobei der erste Anschluss 42 in die erste Kammer 8 und der zweite Anschluss 43 in die zweite Kammer 9 mündet. Der Kolben 24 trennt die erste Kammer 8 von der zweiten Kammer 9. Weiterhin bevorzugt ist am ersten Anschluss 42 ein erster Sicherheitsanschluss 42a und ein erster Arbeitsanschluss 42b vorgesehen. Am zweiten Anschluss 43 mündet vorzugsweise ein zweiter Sicherheitsanschluss 43a und ein zweiter Arbeitsanschluss 43b ein. Im Bereich der Einmündung der Sicherheitsanschlüsse 42a, 43a und der Arbeitsanschlüsse 42b, 43b in die Anschlüsse 42, 43 ist jeweils ein Stellglied 12 vorgesehen, welches abwechselnd entweder den Sicherheitsanschluss 42a, 43a oder den Arbeitsanschluss 42b, 43b blockiert und den jeweils anderen Anschluss freigibt. Bei der dargestellten Ausführungsform ist das Stellglied 12 jeweils derart angeordnet, dass der Sicherheitsanschluss 42a, 43a verschlossen ist und der Arbeitsanschluss 42b, 43b offen. Bei dem in der Figur dargestellten Zustand der Zylindereinheit handelt es sich somit um den normalen Betriebsmodus der Zylindereinheit, in dem die Stange 2 durch Ein- und Ausströmen von Fluid in die erste Kammer 8 und die zweite Kammer 9 längs der Stellachse verlagert werden kann. In diesem Zustand ist der Sicherheitsauslass 44 vorzugsweise verschlossen. Mit anderen Worten funktioniert in diesem Zustand die Zylindereinheit wie ein gewöhnlieher Hydraulik- oder Pneumatikzylinder, über welchen eine Lenkbewegung an den Rädern des Nutzfahrzeuges erreicht werden kann. Gestrichelt ist in Fig. 1 der Zustand der Stellglieder 12 dargestellt, in welchen diese den Sicherheitsanschluss 42a, 43a freigeben und den Arbeitsanschluss 42b, 43b verschließen. In dieser Stellung kann ein Sicherheitsfluid in die erste Kammer 8 und die zweite Kammer 9 einströmen, wobei der Kolben 24 durch das in beide Kammern 8, 9 einströmende Fluid solange längs der Stellachse S verlagert wird, bis er sich genau über dem Sicherheitsauslass 44 befindet und ein Herausströmen des Sicherheitsfluides aus der Zylindereinheit über den Sicherheitsauslass 44 verhindert. Ausgehend von dem in Fig. 1 gezeigten Zustand würde sich der Kolben also nach rechts verlagern, solange bis er genau über dem Sicherheitsauslass 44 steht und seine beiden Dichtungen 10 die rechte und die linke Seite des Sicherheitsauslasses 44 abdichten. Besonders bevorzugt ist an den Stellgliedern 12 ein Rückstellmittel 13 vorgesehen, welches derart vorgespannt ist, dass es die Stellglieder 12 in Richtung der gestrichelt dargestellten Stellung zu verlagern sucht. Mit einem dem Rückstellmittel 13 gegenüberwirkenden Pfeil ist eine Steuerkraft gekennzeichnet, welche vom System oder einer Steuereinheit des Nutzfahrzeuges im regulären Betrieb anliegt, zumindest so groß wie die Rückstellkraft des Rückstellelements 13 ist und das Stellglied 12 jeweils in die Stellung verlagert, in der der Sicherheitsanschluss 42a, 43a verschlossen und die Arbeitsanschlüsse 42b und 43b jeweils geöffnet sind.

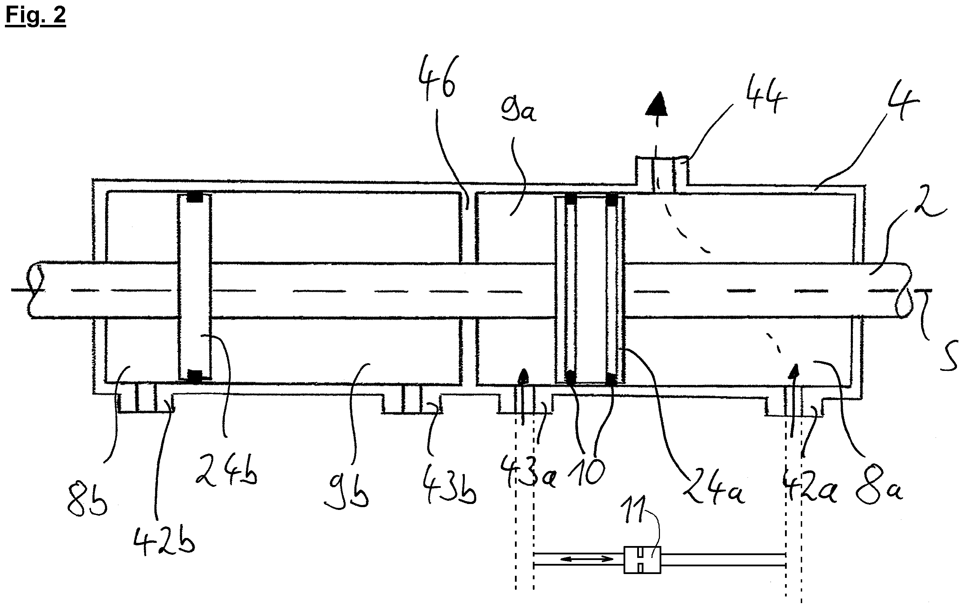

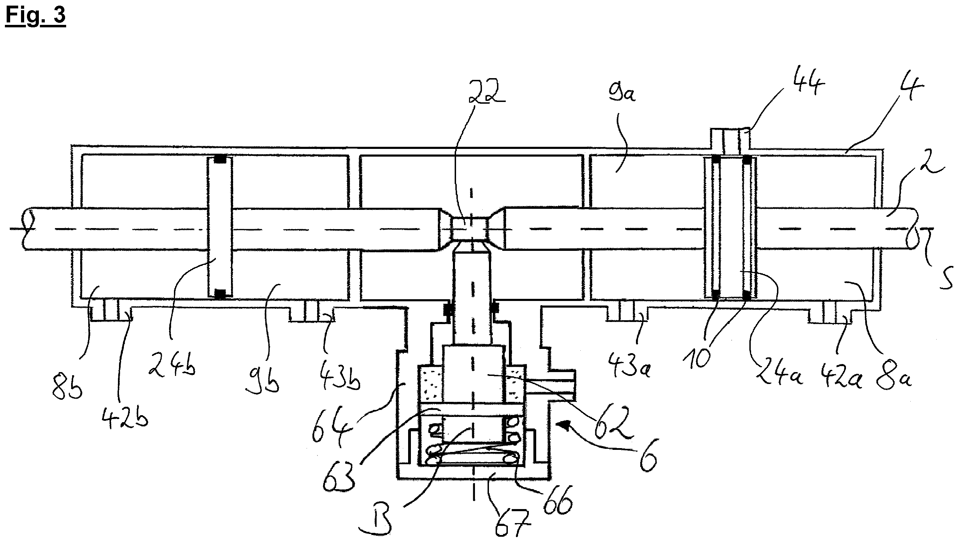

Fig. 2 zeigt eine alternativ bevorzugte Ausführungsform der erfindungsgemäßen Zylindereinheit, wobei der Arbeitskreislauf und der Sicherheitskreislauf der Zylindereinheit vorzugsweise getrennt voneinander, insbesondere bevorzugt räumlich getrennt voneinander vorgesehen sind. Das Gehäuse 4 weist dabei auf der linken Seite den Arbeitsbereich auf, welcher durch eine Trennwand 46 von dem Sicherheitsbereich des Gehäuses 4 getrennt vorgesehen ist. Im Sicherheitsbereich ist vorzugsweise eine erste Sicherheitskammer 8a und eine zweite Sicherheitskammer 9a durch einen ersten Kolben 24a voneinander getrennt vorgesehen. Der erste Kolben 24a weist zwei Dichtungen 10 auf, deren Abstand zueinander größer ist als die Erstreckung des Sicherheitsauslasses 44 längs oder parallel zur Stellachse S. Weiterhin bevorzugt mündet ein erster Sicherheitsanschluss 42a in die erste Sicherheitskammer 8a und ein zweiter Sicherheitsanschluss 43a in die zweite Sicherheitskammer 9a. Links neben der Trennwand 46 und somit vorzugsweise vollständig vom Sicherheitsbereich abgetrennt ist ein Arbeitsbereich vorgesehen, bei welchem eine erste Arbeitskammer 8b und eine zweite Arbeitskammer 9b durch einen zweiten Kolben 24b voneinander getrennt sind. Ein erster Arbeitsanschluss 42b mündet in die erste Arbeitskammer 8b und ein zweiter Arbeitsanschluss 43b mündet in die zweite Arbeitskammer 9b. Im regulären Betrieb wird die Stange 2 vorzugsweise über den zweiten Kolben 24b längs der Stellachse S durch Ein- und Ausströmen von Fluid in die erste Arbeitskammer 8b und die zweite Arbeitskammer 9b erreicht. Sollte das hydraulische oder pneumatische System des Nutzfahrzeuges ausfallen und kein ausreichender Druck mehr zur Bedrückung der ersten Arbeitskammer 8b und der zweiten Arbeitskammer 9b vorhanden sein, so wird vorzugsweise ein Sicherheitsfluid in die erste Sicherheitskammer 42a und die zweite Sicherheitskammer 43a mit gleichem Druck eingeleitet. Dabei baut sichbei dem in Fig. 2 gezeigten Zustand auf der linken Seite des ersten Kolbens 24a in der zweiten Sicherheitskammer 9a ein höherer Druck auf, als in der ersten Sicherheitskammer 8a. Solange der Sicherheitsauslass 44 noch nicht durch den ersten Kolben 24a verschlossen ist, kann somit das in die erste Sicherheitskammer 8a einströmende Fluid durch den Sicherheitsauslass 44 herausströmen, während das in die zweite Sicherheitskammer 9a einströmende Sicherheitsfluid dort für einen Druckaufbau sorgt. Der Druck in der zweiten Sicherheitskammer 9a überwiegt somit dem Druck in der ersten Sicherheitskammer 8a und der erste Kolben 24a führt eine Bewegung nach rechts aus. Sobald sich die Stange 2 gemeinsam mit dem ersten Kolben 24a in der Nulllage befindet, in welcher der erste Kolben 24a genau auf Höhe des Sicherheitsauslasses 44 angeordnet ist, kann kein Sicherheitsfluid mehr durch den Sicherheitsauslass 44 entströmen. Hierdurch baut sich in der ersten Sicherheitskammer 8a und der zweiten Sicherheitskammer 9a der gleiche Druck auf, wodurch eine pneumatische oder hydraulische Blockierung des ersten Kolbens 24 eintritt. Auf diese Weise wird die Stange 2 hydraulisch oder pneumatisch gegen Verlagerung längs oder parallel zur Schwenkachse S gesichert. Vorzugsweise ist an den Sicherheitsanschlüssen 42a, 43a ein Dämpfer 11 angeschlossen, welcher beispielsweise auf dem Prinzip der Fluidreibungsdämpfung basiert. Der Dämpfer 11 ist bevorzugt zwischen den zu den Sicherheitsanschlüssen 42a, 43a hinführenden Leitungen angeschlossen und umfasst vorzugsweise eine Blende. Schwingungen der Stange 2 relativ zum Gehäuse 4 können somit sowohl im Normalbetrieb der Zylindereinheit als auch im Sicherheitsbetrieb gedämpft werden. Vorzugsweise ist der Dämpfer 11 mit einem Verschlussmechanismus, beispielsweise ein Absperrventil, ausgestattet, damit die Wirkung der hydraulischen Lenkblockierung nach Verschluss des Sicherheitsauslasses 44 nicht gestört wird. Bevorzugt kann ein Dämpfer 11 auch bei den in den Figuren 1 und 3 gezeigten Ausführungsformen zum Einsatz gelangen.

Fig. 3 zeigt eine Ausführungsform der Zylindereinheit, bei der zusätzlich zur Ausführungsform von Fig. 2 noch eine Blockiereinheit 6 am Gehäuse 4, vorzugsweise im Bereich der Trennwand 46 aus Fig. 2, vorgesehen ist. Dabei ist gezeigt, dass die Blockiereinheit 6 in einer zweiten Stellung über ein Blockierelement 62, welches in einen Eingriffsabschnitt 22 an der Stange 2 eingreift, eine Verlagerung der Stange 2 längs der Stellachse S verhindert. Diese Sicherung geschieht dabei zusätzlich oder alternativ zu einer Blockierung der Stange durch den ersten Kolben 24a und das in der ersten und der zweiten Sicherheitskammer 8a, 9a befindliche Fluid. Weiterhin ist der Blockierträger 64 vorzugsweise größtenteils einstückig mit dem Gehäuse 4 ausgeführt. Nur der Deckel 67 wird hier nach dem Einführen des Blockierelements 62 und des Rückstellmittels 66 auf geschraubt, was die Montage vereinfacht und eine hohe Stabilität der Schnittstelle zwischen Gehäuse 4 und Blockiereinheit 6 gewährleistet. Es versteht sich, dass sowohl die einstückige als auch die mehrteilige Ausführung dieser Schnittstelle in allen anderen hier gezeigten Varianten der Erfindung zum Einsatz gelangen kann. In der zweiten Stellung der Blockiereinheit 6 steht das Blockierelement 62 in Eingriff mit dem Eingriffsabschnitt 22 der Stange 2. In dem in Fig. 3 gezeigten, zweiten Zustand der Blockiereinheit 6, ist eine Verlagerungsbewegung der Stange 2 längs der Stellachse S relativ zum Gehäuse 4 und zur Blockiereinheit 6 nicht mehr möglich. Um die Blockiereinheit 6 wieder in einen ersten Zustand zu bringen, in welchem das Blockierelement 62 nicht in Eingriff mit der Stange 2 steht, muss der Druck eines Haltemittels erhöht werden, so dass die Kraft des Haltemittels die Rückstellkraft des Rückstellmittels 66 überwiegt und schließlich das Blockierelement 62 wieder außer Eingriff mit der Stange 2 gebracht werden kann.

### Bezugszeichenliste:

- 2: - Stange
- 24: - Kolben
- 24a: - erster Kolben
- 24b: - zweiter Kolben
- 4: - Gehäuse
- 42: - erster Anschluss
- 42a: - erster Sicherheitsanschluss
- 42b: - erster Arbeitsanschluss
- 43: - zweiter Anschluss
- 43a: - zweiter Sicherheitsanschluss
- 43b: - zweiter Arbeitsanschluss
- 44: - Sicherheitsauslass
- 6: - Blockiereinheit
- 8: - erste Kammer
- 8a: - erste Sicherheitskammer
- 8b: - erste Arbeitskammer
- 9: - zweite Kammer
- 9a: - zweite Sicherheitskammer
- 9b: - zweite Arbeitskammer
- 10: - Dichtungselement
- 11: - Dämpfer
- 12: - Stellglied
- 13: - Rückstellelement
- S: - Stellachse

## Patentansprüche

1. Zylindereinheit umfassend eine Stange (2) und ein Gehäuse (4),
wobei die Stange (2) längs einer Stellachse (S) verlagerbar an dem Gehäuse (4) geführt ist,
wobei an der Stange (2) ein Kolben (24, 24a) festgelegt ist, welcher den Innenraum des Gehäuses (4) in eine erste Kammer (8, 8a) und eine zweite Kammer (9, 9a) teilt,
wobei das Gehäuse (4) einen Sicherheitsauslass (44) aufweist, wobei der Sicherheitsauslass (44) derart angeordnet und/oder ausgebildet ist, dass der Kolben (24, 24a) den Sicherheitsauslass (44) fluiddicht verschließt, wenn sich die Stange (2) in einer Nulllage befindet,
**dadurch gekennzeichnet, dass** ein erster Sicherheitsanschluss (42a) und ein erster Arbeitsanschluss (42b) am Gehäuse (4) oder an einem am Gehäuse (4) angeordneten ersten Anschluss (42) angeordnet sind und in die erste Kammer (8) münden,
wobei ein zweiter Sicherheitsanschluss (43a) und ein zweiter Arbeitsanschluss (42b) am Gehäuse (4) oder an einem am Gehäuse (4) angeordneten zweiten Anschluss (43) angeordnet sind und in die zweite Kammer (9) münden, und
wobei zwei Stellglieder (12) vorgesehen sind, die entweder die Sicherheitsanschlüsse (42a, 43a) oder die Arbeitsanschlüsse (42b, 43b) blockieren.

2. Zylindereinheit nach Anspruch 1,
wobei der Sicherheitsauslass (44) als Aussparung in der Innenwand des Gehäuses (4) ausgebildet ist,
wobei der Kolben (24, 24a) eine Erstreckung parallel zur Stellachse (S) aufweist, die zumindest so groß ist, wie die Erstreckung des Sicherheitsauslasses (44) parallel zur Stellachse (S).

3. Zylindereinheit nach einem der vorhergehenden Ansprüche,
wobei der erste Anschluss (42) in die erste Kammer (8, 8a) mündet und der zweite Anschluss (43) in die zweite Kammer (9, 9a),
wobei der Sicherheitsauslass (44) vorzugsweise oberhalb oder gegenüberliegend der Anschlüsse (42, 43) angeordnet ist.

4. Zylindereinheit nach Anspruch 3,
wobei über die Anschlüsse (42, 43) ein Betriebsfluid (A, B) oder ein Sicherheitsfluid (Z) in die Kammern (8, 9) einleitbar ist.

5. Zylindereinheit nach einem der vorhergehenden Ansprüche,
wobei der Kolben (24, 24a) zwei Dichtungselemente (10) aufweist,
wobei der parallel zur Stellachse (S) gemessene Abstand der Dichtungselemente (10) voneinander gleich der oder größer als die Erstreckung des Sicherheitsauslasses (44) parallel zur Stellachse ist.

6. Zylindereinheit nach einem der vorhergehenden Ansprüche,
wobei die Stange (2) einen ersten Kolben (24a) und einen zweiten Kolben (24b) aufweist, welche voneinander beabstandet sind,
wobei der erste Kolben (24a) eine erste Sicherheitskammer (8a) und eine zweite Sicherheitskammer (9a) voneinander trennt,
wobei der zweite Kolben (24b) eine erste Arbeitskammer (8b) und eine zweite Arbeitskammer (9b) voneinander trennt,
wobei die zweite Arbeitskammer (9b) und die zweite Sicherheitskammer (9a) durch eine Trennwand (46) des Gehäuses (4) voneinander getrennt sind.

7. Zylindereinheit nach Anspruch 6,
wobei ein Sicherheitsmodus der Zylindereinheit durch Einleiten eines Fluids gleichen Druckes in die erste und die zweite Sicherheitskammer (8a, 9a) herstellbar ist,
wobei der erste Kolben (24a) ausgelegt ist, nach einer Verlagerung in Richtung des Sicherheitsauslasses (44), den Sicherheitsauslass (44) fluiddicht zu verschließen.

8. Zylindereinheit nach einem der Ansprüche 6 oder 7,
aufweisend einen Betriebsmodus , welcher **dadurch gekennzeichnet ist, dass** der zweite Kolben (24b) durch ein Fluid der ersten Arbeitskammer (8b) oder der zweiten Arbeitskammer (9b) längs der Stellachse (S) verschiebbar ist, wobei die erste und die zweite Sicherheitskammer (8a, 9a) vorzugsweise fluidleer sind.

9. Zylindereinheit nach einem der Ansprüche 6 bis 8,
wobei die erste und die zweite Sicherheitskammer (8a, 9a) dafür ausgelegt sind, mit Druckluft befüllt zu werden.

10. Zylindereinheit nach einem der vorherigen Ansprüche,
wobei jedes Stellglied (12) ein Rückstellelement (13) aufweist, welches vorgespannt ist und derart auf das Stellglied (12) wirkt, dass dieses in die Stellung verlagert wird, in der es den Arbeitsanschluss (42b, 43b) blockiert und den Sicherheitsanschluss (42a, 43a) freigibt.

11. Zylindereinheit nach Anspruch 10,
wobei an einem Stellglied (12) eine Steuerkraft anlegbar ist, welche der Kraft des Rückstellelements (13) entgegenwirkt,
wobei bei Überwiegen der Steuerkraft das Stellglied (12) in die Stellung brinbar ist, in welcher es den Sicherheitsanschluss (42a, 43a) blockiert und den Arbeitsanschluss (42b, 43b) freigibt.

12. Zylindereinheit nach einem der Ansprüche 10 oder 11,
wobei der Sicherheitsauslass (44) verschließbar ist,
wobei der Sicherheitsauslass (44) verschlossen ist, wenn die Stellglieder (12) die Sicherheitsanschlüsse (42a, 43a) blockieren.

13. Zylindereinheit nach einem der vorhergehenden Ansprüche,
wobei eine Blockiereinheit (6) vorgesehen ist, um die Stange (2) in der Nulllage zu sichern.

14. Zylindereinheit nach Anspruch 13,
wobei die Blockiereinheit (6) am Gehäuse (4) festgelegt oder in das Gehäuse (4) zumindest bereichsweise integriert ist.

## Claims

1. A cylinder unit comprising a rod (2) and a housing (4), wherein the rod (2) is guided on the housing (4) so as to be displaceable along an adjustment axis (S),
wherein a piston (24, 24a) is fixed to the rod (2), which piston divides the interior space of the housing (4) into a first chamber (8, 8a) and a second chamber (9, 9a),
wherein the housing (4) has a safety outlet (44), wherein the safety outlet (44) is arranged and/or formed such that the piston (24, 24a) closes off the safety outlet (44) in fluid-tight fashion when the rod (2) is in a zero position,
**characterised in that** a first safety port (42a) and a first working port (42b) are arranged on the housing (4) or are arranged on the first port (42) that is arranged on the housing (4) and open into the first chamber (8),
wherein a second safety port (43a) and a second working port (42b) are arranged on the housing (4) or on the second port (43) that is arranged on the housing (4) and open into the second chamber (9), and
wherein two actuating elements (12) are provided which block either the safety ports (42a, 43a) or the working ports (42b, 43b).

2. The cylinder unit as claimed in claim 1,
wherein the safety outlet (44) is formed as an aperture in the inner wall of the housing (4), wherein the piston (24, 24a) has an extent parallel to the adjustment axis (S), which extent is at least as great as the extent of the safety outlet (44) parallel to the adjustment axis (S).

3. The cylinder unit as claimed in one of the preceding claims,
wherein the first port (42) opens into the first chamber (8, 8a) and the second port (43) opens into the second chamber (9, 9a),
wherein the safety outlet (44) is preferably arranged above or opposite the ports (42, 43).

4. The cylinder unit as claimed in claim 3,
wherein an operating fluid (A, B) or a safety fluid (Z) can be introduced into the chambers (8, 9) via the ports (42, 43).

5. The cylinder unit as claimed in one of the preceding claims,
wherein the piston (24, 24a) has two seal elements (10),
wherein the spacing, measured parallel to the adjustment axis (S), of the seal elements (10) to one another is equal to or greater than the extent of the safety outlet (44) parallel to the adjustment axis.

6. The cylinder unit as claimed in one of the preceding claims, wherein the rod (2) has a first piston (24a) and a second piston (24b) which are spaced apart from one another,
wherein the first piston (24a) separates a first safety chamber (8a) and a second safety chamber (9a) from one another,
wherein the second piston (24b) separates a first working chamber (8b) and a second working chamber (9b) from one another,
wherein the second working chamber (9b) and the second safety chamber (9a) are separated from one another by a partition (46) of the housing (4).

7. The cylinder unit as claimed in claim 6,
wherein a safety mode of the cylinder unit can be produced by introducing a fluid at equal pressure into the first and the second safety chamber (8a, 9a),
wherein the first piston (24a) is designed to, after a displacement in the direction of the safety outlet (44), close off the safety outlet (44) in fluid-tight fashion.

8. The cylinder unit as claimed in either of claims 6 and 7,
having an operating mode which is **characterized in that** the second piston (24b) is displaceable along the adjustment axis (S) by a fluid of the first working chamber (8b) or of the second working chamber (9b),
wherein the first and the second safety chamber (8a, 9a) are preferably empty of fluid.

9. The cylinder unit as claimed in one of claims 6 to 8,
wherein the first and the second safety chamber (8a, 9a) are designed for being filled with compressed air.

10. The cylinder unit as claimed in one of the preceding claims,
wherein each actuating element (12) has a restoring element (13) which is preloaded and which acts on the actuating element (12) such that the latter is displaced into the position in which it blocks the working port (42b, 43b) and opens up the safety port (42a, 43a).

11. The cylinder unit as claimed in claim 10,
wherein a control force which acts counter to the force of the restoring element (13) can be applied to an actuating element (12),
wherein, if the control force prevails, the actuating element (12) can be moved into the position in which it blocks the safety outlet (42a, 43a) and opens up the working port (42b, 43b).

12. The cylinder unit as claimed in either of claims 10 and 11,
wherein the safety outlet (44) can be closed off, wherein the safety outlet (44) is closed off when the actuating elements (12) block the safety ports (42a, 43a).

13. The cylinder unit as claimed in one of the preceding claims,
wherein a blocking unit (6) is provided for securing the rod (2) in the zero position.

14. The cylinder unit as claimed in claim 13,
wherein the blocking unit (6) is fixed to the housing (4) or is integrated at least in regions into the housing (4).

## Revendications

1. Ensemble de vérin, comportant une tige (2) et un boîtier (4),
dans lequel
la tige (2) est guidée de façon mobile sur le boîtier (4) le long d'un axe de réglage (S),
un piston (24, 24a) est immobilisé sur la tige (2), qui subdivise le volume intérieur du boîtier (4) en une première chambre (8, 8a) et en une seconde chambre (9, 9a),
le boîtier (4) présente une sortie de sécurité (44),
la sortie de sécurité (44) est agencée et/ou réalisée de telle sorte que le piston (24, 24a) referme de façon étanche aux fluides la sortie de sécurité (44) lorsque la tige (2) se situe dans une position de zéro,
**caractérisée en ce qu'**un premier raccord de sécurité (42a) et un premier raccord de travail (42b) sont agencés sur le boîtier (4) ou sur un premier raccord (42) agencé sur le boîtier (4) et débouchent dans la première chambre (8),
un second raccord de sécurité (43a) et un second raccord de travail (42b) sont agencés sur le boîtier (4) ou sur un second raccord (43) agencé sur le boîtier (4) et débouchent dans la seconde chambre (9), et
il est prévu deux organes de réglage (12) qui bloquent soit les raccords de sécurité (42a, 43a) soit les raccords de travail (42b, 43b).

2. Ensemble de vérin selon la revendication 1,
dans lequel
la sortie de sécurité (44) est réalisée sous forme d'échancrure dans la paroi intérieure du boîtier (4),
le piston (24, 24a) présente une extension parallèlement à l'axe de réglage (S) qui est au moins aussi importante que l'extension de la sortie de sécurité (44) parallèlement à l'axe de réglage (S).

3. Ensemble de vérin selon l'une des revendications précédentes,
dans lequel
le premier raccord (42) débouche dans la première chambre (8, 8a) et le second raccord (43) débouche dans la seconde chambre (9, 9a), et
le raccord de sécurité (44) est agencé de préférence au-dessus ou en regard des raccords (42, 43).

4. Ensemble de vérin selon la revendication 3,
dans lequel
les raccords (42, 43) permettent d'introduire un fluide de fonctionnement (A, B) ou un fluide de sécurité (Z) dans les chambres (8, 9).

5. Ensemble de vérin selon l'une des revendications précédentes,
dans lequel
le piston (24, 24a) présente deux éléments d'étanchéité (10),
la distance des éléments d'étanchéité l'un de l'autre, mesurée parallèlement à l'axe de réglage (S), est égale ou supérieure à l'extension de la sortie de sécurité (44) parallèlement à l'axe de réglage.

6. Ensemble de vérin selon l'une des revendications précédentes,
dans lequel
la tige (2) comprend un premier piston (24a) et un second piston (24b), qui sont espacés l'un de l'autre,
le premier piston (24a) sépare une première chambre de sécurité (8a) et une seconde chambre de sécurité (9a) l'une de l'autre,
le second piston (24b) sépare une première chambre de travail (8b) et une seconde chambre de travail (9b) l'une de l'autre,
la seconde chambre de travail (9b) et la seconde chambre de sécurité (9a) sont séparées l'une de l'autre par une cloison (46) du boîtier (4).

7. Ensemble de vérin selon la revendication 6,
dans lequel
un mode de sécurité de l'ensemble de vérin peut être établi par introduction d'un fluide de pression égale dans la première et dans la seconde chambre de sécurité (8a, 9a),
le premier piston (24a) est conçu pour refermer de façon étanche aux fluides la sortie de sécurité (44) après un déplacement en direction de la sortie de sécurité (44).

8. Ensemble de vérin selon l'une des revendications 6 ou 7,
présentant un mode de fonctionnement qui est **caractérisé en ce que** le second piston (24b) est mobile le long de l'axe de réglage (S) par un fluide de la première chambre de travail (8b) ou de la seconde chambre de travail (9b), et
la première et la seconde chambre de sécurité (8a, 9a) sont de préférence dépourvues de fluide.

9. Ensemble de vérin selon l'une des revendications 6 à 8,
dans lequel
la première et la seconde chambre de sécurité (8a, 9a) sont conçues pour être remplies avec de l'air comprimé.

10. Ensemble de vérin selon l'une des revendications précédentes,
dans lequel
chaque organe de réglage (12) comprend un élément de rappel (13) qui est précontraint et qui agit sur l'organe de réglage (12) de telle sorte que celui-ci est déplacé dans la position dans laquelle il bloque le raccord de travail (42b, 43b) et libère le raccord de sécurité (42a, 43a).

11. Ensemble de vérin selon la revendication 10,
dans lequel
une force de commande peut être appliquée à un organe de réglage (12), qui s'oppose à la force de l'élément de rappel (13), et
lorsque la force de commande est prépondérante, l'organe de réglage (12) peut être amené dans la position dans laquelle il bloque le raccord de sécurité (42a, 43a) et libère le raccord de travail (42b, 43b).

12. Ensemble de vérin selon l'une des revendications 10 ou 11,
dans lequel
la sortie de sécurité (44) est refermable,
la sortie de sécurité (44) est fermée lorsque les organes de réglage (12) bloquent les raccords de sécurité (42a, 43a).

13. Ensemble de vérin selon l'une des revendications précédentes,
dans lequel
il est prévu une unité de blocage (6) pour bloquer la tige (2) dans la position de zéro.

14. Ensemble de vérin selon la revendication 13,
dans lequel
l'unité de blocage (6) est immobilisée sur le boîtier (4) ou intégrée au moins localement dans le boîtier (4).
